# EUROPÄISCHE PATENTSCHRIFT

(11) **EP 2 565 486 B1**
(45) Veröffentlichungstag und Bekanntmachung des Hinweises auf die Patenterteilung: **14.05.2014**
(21) Anmeldenummer: 12005155.2
(22) Anmeldetag: 13.07.2012
(51) Int. Cl.: F16D 65/12

(54) **Innenbelüftete Bremsscheibe für eine Scheibenbremse eines Kraftfahrzeugs sowie Verfahren zur Herstellung einer Bremsscheibe**
Disque de frein à ventilation pour un frein à disque d'un véhicule automobile et procédé de fabrication d'un disque de frein
Internally ventilated brake disc for a disc brake of a vehicle and method for manufacturing such a brake disc

(30) Priorität: 27.08.2011 DE 102011111837
(43) Veröffentlichungstag der Anmeldung: 06.03.2013
(73) Patentinhaber: AUDI AG, 85045 Ingolstadt (DE)
(72) Erfinder: Hantschke, Christopher, 85080 Gaimersheim (DE)

(56) Entgegenhaltungen:
- EP-A2- 1 048 872
- US-A- 6 161 660
- US-B2- 7 097 007

## Beschreibung

Die Erfindung betrifft eine innenbelüftete Bremsscheibe für eine Scheibenbremse eines Kraftfahrzeugs gemäß der im Oberbegriff des Patentanspruches 1 angegebenen Art sowie ein Verfahren zur Herstellung einer derartigen Bremsscheibe gemäß dem Patentanspruch 10.

Beim Bremsvorgang entsteht durch die Reibung zwischen Bremsbelag und Bremsscheibe Abrieb, der als Bremsstaubwolke imitiert wird und sich insbesondere im Sichtbereich der Felgentasche ablagert. Diese Felgenverschmutzung wird als besonders störend empfunden.

Zur Vermeidung bzw. Reduzierung der Felgenverschmutzung sind aus dem Stand der Technik verschiedene Methoden bekannt, wie beispielsweise die Verwendung spezieller, reibwertreduzierter Bremsbelege (so genannte NAO-Belege) oder das Vorsehen eines so genannten "Dust-Shields" als Barriere und Sichtschutz zwischen Felge und Bremsanlage. Als nachteilig erweist sich hierbei, dass die NAO-Beläge vor allem nach einer erhöhten Temperaturbeaufschlagung ein schlechteres Reibwertverhalten aufweisen, während der Einsatz eines "Dust-Shields" sich nachteilig auf die Bremsenkühlung auswirkt.

Ein weiterer, aus dem Stand der Technik bekannter Ansatz zur Verringerung der Felgenverschmutzung ist, die innenbelüftete Bremsscheibe mit Durchgangsbohrungen zu versehen, die sich von den Reibflächen der Bremsscheibe zu den Kühlkanälen erstrecken. Der Effekt dieser Ausbildung ist, dass der beim Bremsvorgang entstehende Abrieb von den Durchgangsbohrungen "aufgefangen" und durch die Kühlkanäle radial nach außen auf das Felgenbett transportiert wird. Hiermit ist eine Reduktion der Verschmutzung des sichtbaren Bereichs der Felge verbunden. Lediglich beispielhaft wird auf die US 7,097,007 B2 verwiesen.

Der Erfindung liegt die Aufgabe zu Grunde, eine Innenbelüfte Bremsscheibe für eine Scheibenbremse eines Kraftfahrzeugs gemäß der im Oberbegriff des Patentanspruches 1 angegebenen Art derart weiterzubilden, dass die Felgenverschmutzung im Sichtbereich der Felgentaschen weiter minimiert wird.

Diese Aufgabe wird durch die kennzeichnenden Merkmale des Patentanspruches 1 in Verbindung mit seinen Oberbegriffsmerkmalen gelöst.

Die Unteransprüche 2 bis 9 bilden vorteilhafte Weiterbildungen der Erfindung.

In bekannter Art und Weise umfasst die innenbelüftete Bremsscheibe für eine Scheibenbremse eines Kraftfahrzeugs einen ersten Reibring mit einer äußeren Reibfläche und einen parallel zum ersten Reibring angeordneten zweiten Reibring mit einer inneren Reibfläche. Zwischen den beiden Reibringen sind mehrere Kühlkanäle ausgebildet. Lediglich der Vollständigkeit halber wird angemerkt, dass die Bezeichnung erster Reibring mit einer äußeren Reibfläche bzw. zweiter Reibring mit einer inneren Reibfläche so zu verstehen ist, dass im montierten Zustand der Bremsscheibe am Kraftfahrzeug der erste Reibring mit seiner äußeren Reibfläche in Fahrzeugquerrichtung betrachtet außen und der zweite Reibring mit seiner inneren Reibfläche innen angeordnet ist. Zudem weist in bekannter Art und Weise der vordere Reibring und/oder der hintere Reibring mehrere Durchgangsöffnungen auf, die sich von der jeweiligen Reibfläche bis zu einem Kühlkanal erstrecken.

Erfindungsgemäß weist der erste Reibring an seinem Außendurchmesser eine in Richtung auf den inneren Reibring ausgerichtete und bereichsweise über die Kühlkanäle reichende Prallkante auf. Das Vorsehen der erfindungsgemäßen Prallkante am Außendurchmesser der Bremsscheibe erweist sich als vorteilhaft, da nunmehr der von den Durchgangsöffnungen eingefangene und durch die Kühlkanäle radial nach außen beschleunigte Bremsstaub durch die Prallkante axial in Richtung zur Fahrzeuginnenseite abgelenkt wird, ehe der Bremsstaub den Kontakt zur Bremsscheibe verliert. Dies hat den Vorteil, dass die Ablagerung des Bremsstaubs im Felgenbett zur Fahrzeugmittelachse hin verschoben wird, so dass der Bremsstaub schlechter zu erkennen ist und daher als nicht bzw. weniger störend empfunden wird.

Vorzugsweise sind auf der äußeren und/oder inneren Reibfläche der Bremsscheibe mehrere Nuten eingebracht, wobei sich die mehreren Durchgangsöffnungen nun vom Nutgrund aus zum Kühlkanal hin erstrecken. Die Kombination von Nuten mit integrierten Durchgangsöffnungen erweist sich als vorteilhaft, da hierdurch ein gleichmäßiger Verschleiß von Bremsbelegen und Scheibe gewährleistet ist. Zudem erweisen sich Nuten von Vorteil hinsichtlich der Festigkeit der Bremsscheibe.

Vorzugsweise ist hierbei der Nutgrund der Nuten stumpf zulaufend ausgestaltet. Die stumpf zulaufende Gestaltung des Nutgrunds erweist sich als vorteilhaft, da hierdurch die Rissempfindlichkeit der Bremsscheibe am Lochrand im Nutgrund verringert ist.

Gemäß einer weiteren Ausführungsform sind die Nuten an der äußeren und/oder inneren Reibfläche mit einer Anfasung versehen. Das Vorsehen einer Anfasung hat den positiven Effekt, dass hierdurch ein scharfkantiger Kontakt zwischen Bremsbelag zur Bremsscheibe im Nutbereich ausgeschlossen ist.

Vorzugsweise sind die Durchgangsöffnungen im Nutgrund angefasst ausgebildet sind. Dies erweist sich als vorteilhaft, da hierdurch eine auf die Bremsscheibenfestigkeit ungünstige Kerbwirkung als Ausgangspunkt für Anrisse vermieden wird.

Gemäß einer weiteren Ausführungsform sind die Nuten dabei an ihren in radialer Richtung betrachtet inneren und äußeren Nutende geschlossen ausgebildet. Die geschlossene Ausbildung der Nutenden erweist sich als vorteilhaft in Kombination mit Durchgangsöffnungen im Nutgrund, da hierdurch der gewünschte Effekt des Absagens des Bremsstaubes in den Kühlkanal besonders effektiv erfolgen kann.

Nach einer anderen Ausführungsform sind die die Nuten an ihrem in radialer Richtung betrachtet inneren und/oder äußeren Nutende offen ausgebildet. Hierdurch sind in vorteilhafter Weise eine kostengünstige Fertigung der Nuten und eine hinsichtlich des Geräuschkomforts günstige Ausgestaltung gewährleistet, da ein "Einsperren" und anschließend schlagartiges Entweichen der erhitzten Luft durch das Überfahren des Bremsbelages vermieden wird.

Vorzugsweise sind die Nuten in Umfangsrichtung betrachtet regelmäßig verteilt angeordnet. Die regelmäßig verteilte Anordnung der Nuten und damit die verbundene regelmäßige Verteilung der Durchgangsöffnungen hat den positiven Effekt, dass eine gleichmäßigere Absaugung des Bremsstaubs sichergestellt ist.

Gemäß einer weiteren Ausführungsform sind hierbei die Nuten in radiale Richtung ausgerichtet.

Der Erfindung liegt weiterhin die Aufgabe zu Grunde, ein Verfahren zur Herstellung einer Bremsscheibe anzugeben, das eine fertigungstechnisch einfache und kostengünstige Herstellung der Bremsscheibe ermöglicht.

Diese Aufgabe wird durch die Merkmale des Patentanspruches 10 gelöst.

Die Unteransprüche 11 und 12 bilden vorteilhafte Weiterbildungen der Erfindung aus.

Das Verfahren zur Herstellung einer Bremsscheibe für eine Scheibenbremse umfasst die Verfahrensschritte:
- Herstellen einer die Prallkante berücksichtigten Gussform für die Bremsscheibe,
- Herstellung eines Kerns zur Ausbildung der Kühlkanäle in der Bremsscheibe,
- Herstellung eines Kerns zur Ausbildung von Sacklöchern in der Bremsscheibe, wobei der Kern derart ausgebildet ist, dass sich die Sacklöcher ausgehend von den Kühlkanälen in Richtung zur äußeren und/oder inneren Reibfläche erstrecken,
- Einlegen der Kerne in die Gussform,
- Gießen der Bremsscheibe,
- Abkühlen der gegossenen Bremsscheibe,
- Entfernen der Kerne von der gegossenen Bremsscheibe,
- Spanende Bearbeitung der Oberfläche der Bremsscheibe,
- Fräsen der Nuten in die äußere und/oder innere Reibfläche oberhalb der Sacklöcher, wobei das Fräsen so tief erfolgt, dass die Sacklöcher durchbrochen werden und folglich die Durchgangsöffnungen vom Nutgrund zum Kühlkanal ausgebildet werden.

Das erfindungsgemäße Verfahren erweist sich als besonders vorteilhaft, da nunmehr aufgrund des Vorsehens der Sacklöcher die Durchgangsöffnungen mittels eines einfachen Fräsvorgangs eingebracht werden können. D.h. ein zeit- und kostenintensives Bohren jeder einzelnen Durchgangsöffnung ist durch das erfindungsgemäße Verfahren nicht mehr erforderlich.

Gemäß einer besonders verteilhaften Ausgestaltung des Verfahrens, werden die Nuten mittels eines mehrfach abgestuften Fräskopfes eingebracht. Das Fräsen der Nuten mit einem mehrfach abgestuften Fräskopf hat den Vorteil, dass in einem Arbeitsgang die stumpf zulaufende Gestaltung des Nutgrundes als auch die Anfasung der Nut an der äußern und/oder inneren Reibfläche erzeugt werden.

Um die Durchgangsöffnungen zusätzlich anzufasen, wird vorzugsweise der Fräskopf über den Durchgangsöffnungen abgesenkt. Die Ausbildung einer zusätzlichen Anfasung ist somit in vorteilhafter Weise ohne einen Werkzeugwechsel möglich.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

Die Erfindung wird im Folgenden anhand der in den Zeichnungen dargestellten Ausführungsbeispielen näher beschrieben.

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:
- Fig. 1: eine Draufsicht, auf eine erfindungsgemäße Bremsscheibe;
- Fig. 2: eine Schnittdarstellung, entlang A-A der erfindungsgemäßen Bremsscheibe aus Fig. 1;
- Fig. 3: eine vergrößerte Draufsicht, auf eine Nut der Bremsscheibe aus Fig. 1;
- Fig. 4: eine Schnittdarstellung, entlang B-B der Bremsscheibe aus Fig. 1;
- Fig. 5: eine vergrößerte Draufsicht auf eine weitere Nut einer erfindungsgemäßen Bremsscheibe;
- Fig. 6: eine Schnittdarstellung entlang C-C der Nut aus Fig. 5;
- Fig. 7: eine weitere vergrößerte Draufsicht auf eine weitere Nut einer erfindungsgemäßen Bremsscheibe, und
- Fig. 8: eine Schnittdarstellung entlang D-D der Nut aus Fig. 7:

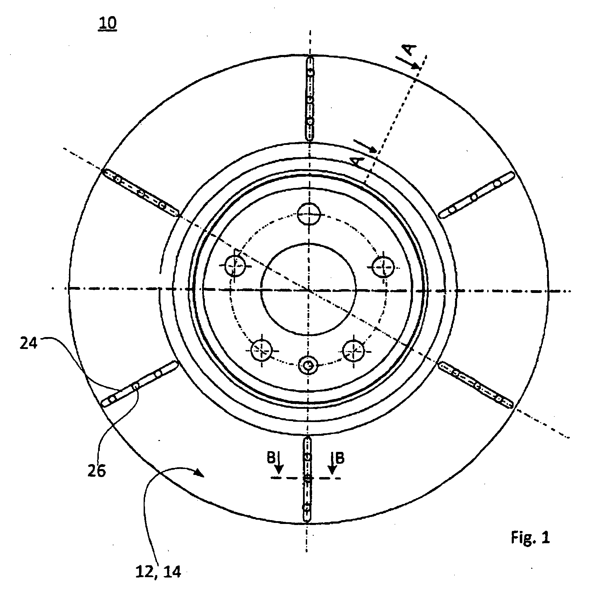

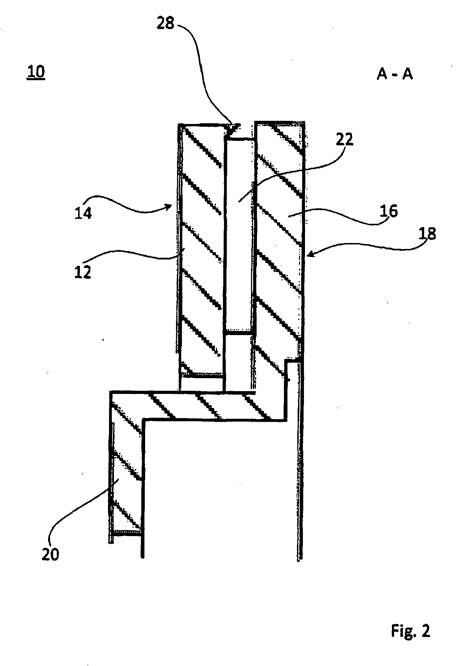

Fig. 1 und Fig. 2 zeigen eine insgesamt mit der Bezugsziffer 10 bezeichnete Bremsscheibe.

Die Bremsscheibe 10 weist einen ersten Reibring 12 mit einer äußeren Reibfläche 14 und einen parallel zum ersten Reibring 12 angeordneten zweiten Reibring 16 mit einer inneren Reibfläche 18 sowie einen topfförmig ausgebildeten Anschlussbereich 20 auf.

Zwischen dem ersten und dem zweiten Reibring 12, 16 sind in bekannter Art und Weise mehrere Kühlkanäle 22 angeordnet.

Wie insbesondere Fig. 1 zu entnehmen ist, sind in die äußere Reibfläche 14 des ersten Reibrings 12 mehrere in radiale Richtung r ausgerichtet Nuten 24 eingebracht. Die Nuten 24 sind in Umfangsrichtung regelmäßig verteilt, vorliegend in einem Winkel von 60° beabstandet voneinander, angeordnet.

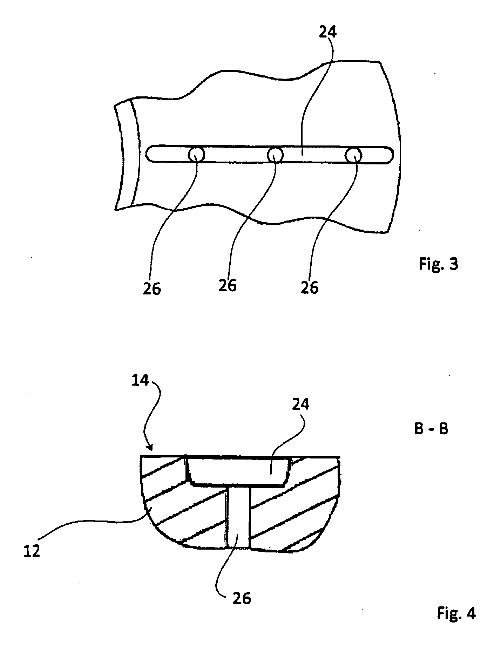

Zudem sind, wie insbesondere aus Fig. 3 ersichtlich, die radial inneren und radial äußeren Ende der Nuten 24 geschlossen ausgebildet.

Weiterhin sind am Nutgrund der Nuten 24 mehrere Durchgangsöffnungen 26 angeordnet, vgl. Fig. 4. Die Durchgangsöffnungen 26 erstrecken sich dabei vom Nutgrund der Nuten 24 bis zu den Kühlkanälen 22. Entsprechend ist auch die Rückseite der Bremsscheibe, d.h. die innere Reibfläche 18 des zweiten Reibrings 14 ausgebildet.

Wie wiederum insbesondere Fig. 1 zu entnehmen ist, ist am Außendurchmesser des ersten Reibrings 12 eine auf den zweiten Reibring 14 ausgerichtete Prallkante 28 ausgebildet.

Der positive Effekt der erfindungsgemäße Ausbildung der Bremsscheibe 10 ist folgender:

Der beim Bremsvorgang emittierte Bremsstaub wird mittels der auf den Reibflächen 14, 18 eingebrachten Nuten 24 "eingefangen" und durch die im Nutgrund der Nuten 24 vorhanden Durchgangsöffnungen 26 in die Kühlkanäle 22 abgesaugt. Der Absaugeffekt beruht auf den Strömungsverhältnissen im Kühlkanal einer sich drehenden innenbelüfteten Bremsscheibe und des dadurch herrschenden Unterdrucks und hohen Strömungsgeschwindigkeiten innerhalb der Kühlkanäle.

Nachdem der Bremsstaub in die Kühlkanäle 22 gelangt ist, wird dieser stark beschleunigt und strömt weiter entlang der Reibringinnenseiten zum Außenrand der Bremsscheibe 10.

Aufgrund der erfindungsgemäß ausgebildeten Prallkante 28 am Außenrand der Bremsscheibe 10 wird der Bremsstaub beim Ablösen von der Bremsscheibe 10 axial in Richtung Fahrzeuginnenseite abgelenkt, so dass die Verschmutzung des sichtbaren Bereichs der Fahrzeugfelge reduziert wird.

Die erfindungsgemäße Bremsscheibe 10 wird vorzugsweise durch ein Gießverfahren hergestellt. Zur gießtechnischen Darstellung der Durchgangsöffnungen 26 werden hierzu Sacklöcher vom Kühlkanal 22 aus in Richtung Bremsscheibenoberfläche eingegossen. Hierzu werden entsprechende Sandkerne verwendet, die nach dem Gießvorgang der Bremsscheibe 10 die Sacklöcher bilden.

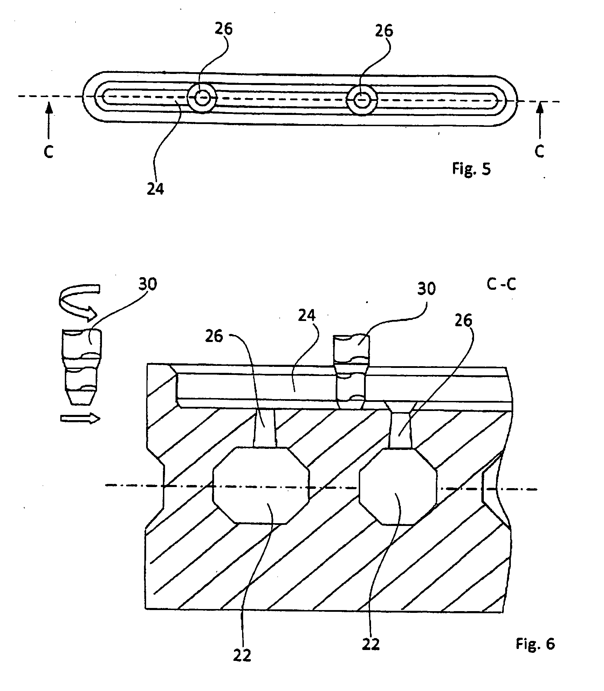

Anschließend erfolgt das Fräsen von Nuten genau oberhalb der Sacklöcher, wie in Fig. 5 und 6 dargestellt. Zum Fräsen wird vorzugsweise ein mehrfach abgestufter Einstechfräser 30 verwendet. Das Fräsen erfolgt so tief, dass die eingegossenen Sacklöcher durchbrochen werden und folglich Durchgangsöffnungen 26 vom Nutgrund zum Kühlkanal 28 entstehen. Aufgrund des abgestuften Fräsers 30 wird in vorteilhafter Weise der Nutgrund stumpfwinklig zulaufend gestaltet und eine Anfasung der Nut 24 an der Reibfläche 12, 14 wird erzeugt.

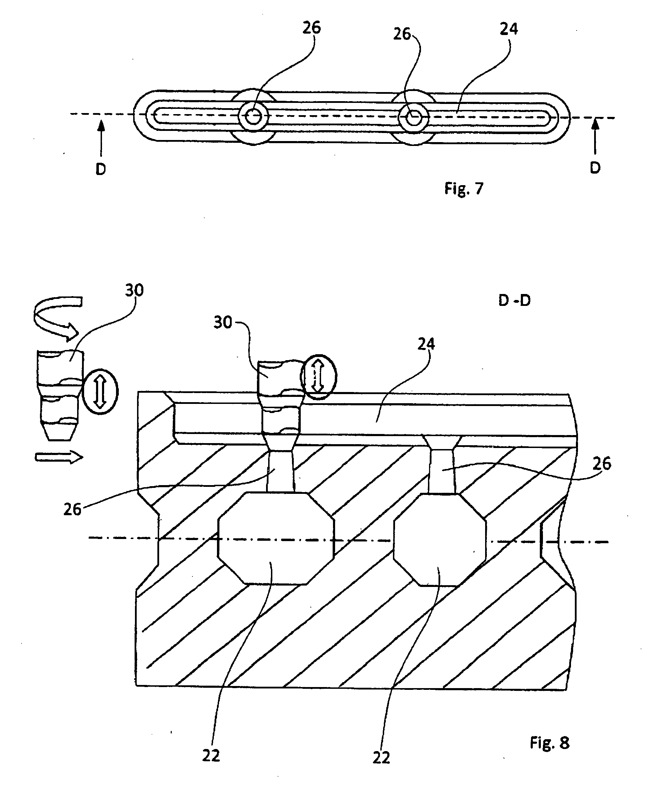

Wie insbesondere aus Fig. 7 und 8 ersichtlich, wird zudem der Fräskopf 30 über den Durchgangsöffnungen 26 zusätzlich abgesenkt, um die Durchgangsöffnungen 26 noch stärker anzufasen. Ein Werkzeugwechsel ist hierfür nicht erforderlich.

### Bezugszeichenliste

- 10: Bremsscheibe
- 12: erster Reibring
- 14: äußere Reibfläche
- 16: zweiter Reibring
- 18: innere Reibfläche
- 20: topfförmiger Anschlussbereich
- 22: Kühlkanäle
- 24: Nuten
- 26: Durchgangsöffnungen
- 28: Prallkante
- 30: Fräskopf

## Patentansprüche

1. Innenbelüftete Bremsscheibe (10) für eine Scheibenbremse eines Kraftfahrzeugs, umfassend
- einen ersten Reibring (12) mit einer äußeren Reibfläche (14) und einen parallel zum ersten Reibring (12) angeordneten zweiten Reibring (16) mit einer inneren Reibfläche (18), sowie
- mehrere zwischen den beiden Reibringen (12, 16) verlaufende Kühlkanäle (22),
wobei der vordere und/oder der hintere Reibring (12, 16) mehrere sich von der Reibfläche (14, 18) bis zu einem Kühlkanal (22) erstreckende Durchgangsöffnungen (26) aufweist, **dadurch gekennzeichnet, dass** der erste Reibring (12) an seinem Außendurchmesser eine auf den zweiten Reibring (16) ausgerichtete Prallkante (28) aufweist.

2. Innenbelüftete Bremsscheibe (10) nach Anspruch 1, **dadurch gekennzeichnet, dass** auf der äußeren Reibfläche (14) und/oder der inneren Reibfläche (18) mehrere Nuten (24) eingebracht sind und sich die mehreren Durchgangsöffnungen (26) vom Nutgrund der Nuten (24) aus erstrecken.

3. Innenbelüftete Bremsscheibe (10) nach Anspruch 2, **dadurch gekennzeichnet, dass** der Nutgrund der Nuten (24) stumpf zulaufend ausgestaltet ist.

4. Innenbelüftete Bremsscheibe (10) nach Anspruch 2 oder 3, **dadurch gekennzeichnet, dass** die Nuten (24) an der äußeren und/oder inneren Reibfläche (14, 18) mit einer Anfasung versehen sind.

5. Innenbelüftete Bremsscheibe (10) nach einem der Ansprüche 2 bis 4, **dadurch gekennzeichnet, dass** die Durchgangsöffnungen (26) im Nutgrund angefast ausgebildet sind.

6. Innenbelüftete Bremsscheibe (10) nach einem der Ansprüche 2 bis 5, **dadurch gekennzeichnet, dass** die Nuten (24) an ihrem in radiale Richtung (r) betrachtet inneren und/oder äußeren Nutende geschlossen ausgebildet sind.

7. Innenbelüftete Bremsscheibe (10) nach einem der Ansprüche 2 bis 5, **dadurch gekennzeichnet, dass** die Nuten (24) an ihrem in radiale Richtung (r) betrachtet inneren und äußeren Nutende offen ausgebildet sind.

8. Innenbelüftete Bremsscheibe (10) nach einem der Ansprüche 2 bis 7, **dadurch gekennzeichnet, dass** die Nuten (24) in Umfangsrichtung betrachtet regelmäßig verteilt angeordnet sind

9. Innenbelüftete Bremsscheibe (10) nach einem der Ansprüche 2 bis 8, **dadurch gekennzeichnet, dass** die Nuten (24) in radiale Richtung (r) ausgerichtet sind.

10. Verfahren zur Herstellung einer Bremsscheibe für eine Scheibenbremse eines Kraftfahrzeugs gemäß einem der Ansprüche 1 bis 9, umfassend die Verfahrensschritte:
- Herstellung einer die Prallkante (28) berücksichtigenden Gussform für die Bremsscheibe (10) ;
- Herstellung eines Kerns zur Ausbildung der Kühlkanäle (22) in der Bremsscheibe (10);
- Herstellung eines Kerns zur Ausbildung von Sacklöchern in der Bremsscheibe (10), wobei der Kern derart ausgebildet ist, dass sich die Sacklöcher ausgehend von den Kühlkanälen (22) in Richtung zur äußeren und/oder inneren Reibfläche (14, 18) erstrecken;
- Einlegen der Kerne in die Gussform;
- Gießen der Bremsscheibe (10);
- Abkühlen der gegossenen Bremsscheibe (10);
- Entfernen der Kerne von der gegossenen Bremsscheibe (10);
- Spanende Bearbeitung der Oberfläche der Bremsscheibe (10);
- Fräsen der Nuten (24) in die äußere und/oder innere Reibfläche (14, 18) oberhalb der Sacklöcher, wobei das Fräsen so tief erfolgt, dass die Sacklöcher durchbrochen werden und folglich die Durchgangsöffnungen (26) vom Nutgrund zum Kühlkanal (22) ausgebildet werden.

11. Verfahren zur Herstellung einer Bremsscheibe nach Anspruch 10, **dadurch gekennzeichnet, dass** die Nuten (24) mittels eines mehrfach abgestuften Fräskopfes (30) eingefräst werden.

12. Verfahren zur Herstellung einer Bremsscheibe nach Anspruch 11, **dadurch gekennzeichnet, dass** der Fräskopf (30) über den Durchgangsbohrungen (26) zusätzlich abgesenkt wird.

## Claims

1. Internally ventilated brake disc (10) for a disc brake of a motor vehicle, comprising
- a first friction ring (12) having an outer friction surface (14) and a second friction ring (16) which is parallel to the first friction ring (12) and comprises an inner friction surface (18), and
- a plurality of cooling ducts (22) extending between the two friction rings (12, 16),
the front and/or the rear friction ring (12, 16) comprising a plurality of through-openings (26) extending from the friction surface (14, 18) as far as a cooling duct (22), **characterised in that** the first friction ring (12) comprises on the outer diameter thereof an impact edge (28) oriented towards the second friction ring (16).

2. Internally ventilated brake disc (10) according to claim 1, **characterised in that** a plurality of grooves (24) are made on the outer friction surface (14) and/or the inner friction surface (18) and the plurality of through-openings (26) extend from the bottoms of the grooves (24).

3. Internally ventilated brake disc (10) according to claim 2, **characterised in that** the bottoms of the grooves (24) are flat.

4. Internally ventilated brake disc (10) according to either claim 2 or claim 3, **characterised in that** the grooves (24) are provided with a chamfer on the outer and/or inner friction surface (14, 18).

5. Internally ventilated brake disc (10) according to any of claims 2 to 4, **characterised in that** the through-openings (26) in the bottoms of the grooves are chamfered.

6. Internally ventilated brake disc (10) according to any of claims 2 to 5, **characterised in that** the grooves (24) are closed on their inner and/or outer groove ends, when viewed in a radial direction (r).

7. Internally ventilated brake disc (10) according to any of claims 2 to 5, **characterised in that** the grooves (24) are open on their inner and outer groove ends, when viewed in a radial direction (r).

8. Internally ventilated brake disc (10) according to any of claims 2 to 7, **characterised in that** the grooves (24) are uniformly distributed when viewed in the circumferential direction.

9. Internally ventilated brake disc (10) according to any of claims 2 to 8, **characterised in that** the grooves (24) are oriented in a radial direction (r).

10. Method for producing a brake disc for a disc brake of a motor vehicle according to any of claims 1 to 9, comprising the method steps of:
- producing a mould for the brake disc (10) which takes into account the impact edge (28);
- producing a core for forming the cooling ducts (22) in the brake disc (10);
- producing a core for forming blind holes in the brake disc (10), the core being designed such that the blind holes extend from the cooling ducts (22) towards the outer and/or inner friction surface (14, 18);
- placing the core into the mould;
- casting the brake disc (10);
- cooling the cast brake disc (10);
- removing the core from the cast brake disc (10);
- machining the surface of the brake disc (10);
- milling the grooves (24) in the outer and/or inner friction surface (14, 18) above the blind holes, the milling being carried out to such a depth that the blind holes are penetrated and therefore the through-holes (26) are formed from the bottoms of the grooves to the cooling ducts (22).

11. Method for producing a brake disc according to claim 10, **characterised in that** the grooves (24) are milled by means of a repeatedly stepped milling head (30).

12. Method for producing a brake disc according to claim 11, **characterised in that** the milling head (30) is lowered further above the through-holes (26).

## Revendications

1. Disque de frein à ventilation interne (10) pour un frein à disque d'un véhicule automobile, comprenant :
- un premier anneau de friction (12) avec une surface de friction externe (14) et un second anneau de friction (16) agencé parallèlement au premier anneau de friction (12) avec une surface de friction interne (18), ainsi que :
- de multiples canaux de refroidissement (22) s'étendant entre les deux anneaux de friction (12, 16),
dans lequel le ou les anneaux de friction avant et/ou arrière (12, 16) présente(nt) de multiples ouvertures de passage (26) s'étendant de la surface de friction (14, 18) jusqu'à un canal de refroidissement (22), **caractérisé en ce que** le premier anneau de friction (12) présente une arête d'impact (28) alignée sur le second anneau de friction (16).

2. Disque de frein à ventilation interne (10) selon la revendication 1, **caractérisé en ce que** de multiples rainures (24) sont ménagées sur la surface de friction externe (14) et/ou sur la surface de friction interne (18) et les multiples ouvertures de passage (26) s'étendent depuis la base des rainures (24).

3. Disque de frein à ventilation interne (10) selon la revendication 2, **caractérisé en ce que** la base des rainures (24) est conformée pour se terminer en tronc de cône.

4. Disque de frein à ventilation interne (10) selon la revendication 2 ou la revendication 3, **caractérisé en ce que** les rainures (24) sont pourvues d'un biseau sur la ou les surfaces de friction externe et/ou interne (14, 18).

5. Disque de frein à ventilation interne (10) selon l'une quelconque des revendications 2 à 4, **caractérisé en ce que** les ouvertures de passage (26) sont biseautées dans la base des rainures.

6. Disque de frein à ventilation interne (10) selon l'une quelconque des revendications 2 à 5, **caractérisé en ce que** les rainures (24) sont conformées fermées à leur extrémité interne et/ou externe en se plaçant dans la direction radiale (r).

7. Disque de frein à ventilation interne (10) selon l'une quelconque des revendications 2 à 5, **caractérisé en ce que** les rainures (24) sont conformées ouvertes à leur extrémité interne et/ou externe en de plaçant dans la direction radiale (r).

8. Disque de frein à ventilation interne (10) selon l'une quelconque des revendications 2 à 7, **caractérisé en ce que** les rainures (24) sont distribuées régulièrement en se plaçant dans la direction périphérique.

9. Disque de frein à ventilation interne (10) selon l'une quelconque des revendications 2 à 8, **caractérisé en ce que** les rainures (24) sont orientées dans la direction radiale (r).

10. Procédé de fabrication d'un disque de frein pour un frein à disque d'un véhicule automobile selon l'une quelconque des revendications 1 à 9, comprenant les étapes consistant à :
- fabriquer un moule en tenant compte de l'arête d'impact (28) pour le disque de frein (10) ;
- fabriquer un noyau pour façonner les canaux de refroidissement (22) dans le disque de frein (10) ;
- fabriquer un noyau pour façonner des trous borgnes dans le disque de frein (10), dans lequel le noyau est conformé de manière que les trous borgnes s'étendent en partant des canaux de refroidissement (22) dans la direction de la surface de friction externe et/ou interne (14, 18) ;
- insérer les noyaux dans le moule ;
- couler le disque de frein (10) ;
- refroidir le disque de frein (10) coulé ;
- retirer les noyaux du disque de frein (10) coulé ;
- traiter la surface du disque de frein (10) par usinage ; et
- fraiser les rainures (24) dans la surface de friction externe et/ou interne (14, 18) au-dessus des trous borgnes, dans lequel le fraisage se fait assez profondément pour que les trous borgnes soient percés et qu'ensuite, les ouvertures de passage (26) soient formées de la base des rainures au canal de refroidissement (22).

11. Procédé de fabrication d'un disque de frein selon la revendication 10, **caractérisé en ce que** les rainures (24) sont fraisées au moyen d'une tête de fraise (30) à étages multiples.

12. Procédé de fabrication d'un disque de frein selon la revendication 11, **caractérisé en ce que** la tête de fraise (30) est en outre appliquée sur les ouvertures de passage (26).
